# EUROPEAN PATENT SPECIFICATION

(11) **EP 2 014 712 B1**
(45) Date of publication and mention of the grant of the patent: **02.06.2010**
(21) Application number: 06756324.7
(22) Date of filing: 25.04.2006
(51) Int. Cl.: C08L 23/08, B32B 27/30, B32B 27/32, B32B 27/34, C08L 29/04, C08L 77/00

(54) **RESIN COMPOSITION AND MULTILAYER STRUCTURE MAKING USE OF THE SAME**
HARZZUSAMMENSETZUNG UND MEHRSCHICHTSTRUKTUR, IN DER DIESE VERWENDET WIRD
COMPOSITION DE RÉSINE ET STRUCTURE MULTICOUCHES FAISANT USAGE DE CELLE-CI

(43) Date of publication of application: 14.01.2009
(73) Proprietor: The Nippon Synthetic Chemical Industry Co., Ltd., Osaka-shi, Osaka 531-0076 (JP)
(72) Inventor: FURUKAWA, Kazuya c/o The Nippon Synthetic Chem. Industry Co. ltd., Osaka 531-0076 (JP); MORIYAMA, Takamasa c/o The Nippon Synthetic Chem. Industry Co. ltd., Osaka 531-0076 (JP); INOUE, Kaoru c/o The Nippon Synthetic Chem. Industry Co. ltd., Osaka 531-0076 (JP)
(74) Representative: Kuhnen & Wacker
(86) International application number: PCT/JP2006/308670
(87) International publication number: WO 2007/129368

(56) References cited:
- EP-A- 1 502 931
- WO-A-2005/121194
- JP-A- 9 109 335
- JP-A- 09 109 335
- JP-A- 2003 025 519
- JP-A- 2004 075 866
- JP-A- 2004 285 143
- JP-A- 2004 359 965
- JP-A- 2004 359 965
- JP-A- 2006 095 748
- JP-A- 2006 124 669

## Description

### Technical Field

The present invention relates to a resin composition comprising a novel ethylene-vinyl alcohol copolymer (A) and a polyamide-based resin (B) as well as a multi-layer structure using the same. More specifically, it relates to a resin composition and a multi-layer structure excellent in retort resistance at high temperature, gas barrier property, and anti-pinhole property.

### Background Art

In general, an ethylene-vinyl alcohol copolymer (hereinafter, referred to as EVOH) is excellent in transparency, gas barrier property, aroma retention property, solvent resistance, oil resistance and the like and has been used for various packaging materials such as a food packaging material, a pharmaceutical packaging material, an industrial chemical packaging material and an agricultural chemical packaging material making the most use of such properties. However, there are defects that a large amount of water is infiltrated to generate voids in EVOH possibly because EVOH is hydrophilic, EVOH is whitened to deteriorate the appearance, and the barrier performance is lowered, when a food or the like is tightly closed in such a packaging material and the whole is exposed to a treatment such as boiling sterilization or retort sterilization, i.e., exposed to a high-temperature and high-humidity state.
In order to overcome such defects, mixing of EVOH with a polyamide-based resin has been proposed (see, e.g., Patent Documents 1 and 2).

Patent Document 1: JP-A-54-078749
Patent Document 2: JP-A-54-078750

JP 2004 359965 A discloses a copolymer which is an ethylene-vinyl alcohol copolymer containing a structural unit represented by the following formula (1) 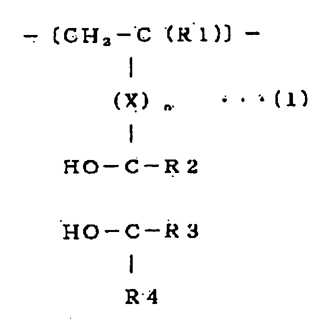 and is preferably obtained by copolymerizing 3,4-diacetoxy-1-butene, vinylester-based monomer, and ethylene. Furthermore, the copolymer is obtained by saponifying a copolymer obtained by copolymerizing 3,4-diacyloxy-1-butene, vinylester-based monomer, and ethylene. Here, in formula (1), X is an optional bond chain excluding an ether bond, R1 to R4 are each independently an optional substituent, and n denotes 0 or 1.

### Disclosure of the Invention

### Problems that the Invention is to Solve

However, when the present inventors have precisely studied the above method, it is confirmed that the appearance and gas barrier property after boiling sterilization or retort sterilization is conducted are improved but the anti-pinhole property after boiling sterilization or retort sterilization is lowered and the gas barrier property is lowered when a multi-layer structure is bent. Also, an effect of improving the retort resistance is not sufficient in retort treatment at such a high temperature as 130°C. Thus, it is desired to develop a resin composition excellent in retort resistance at high temperature and gas barrier property and having good anti-pinhole property even after subjected to the retort treatment as well as a multi-layer structure using the resin composition.

### Means for Solving the Problems

As a result of the extensive studies in consideration of such situations, the present inventors have found that a resin composition comprising EVOH (A) comprising the following structural unit (1) and a polyamide-based resin (B) meets the above object and thus have accomplished the invention.

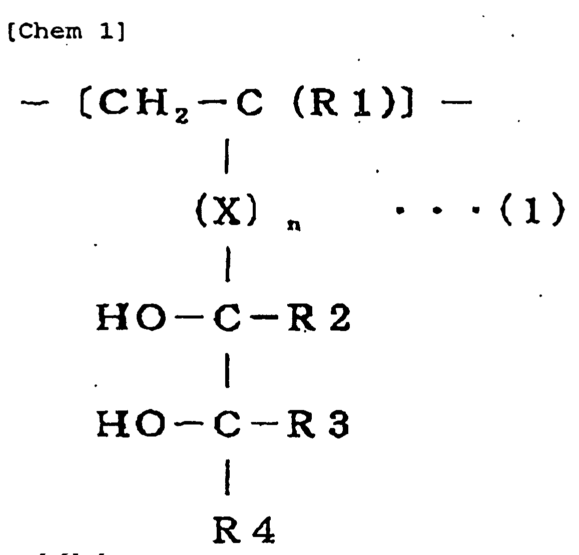

wherein the polyamide based resin (B) is a terminal-controlled polyamide-based resin and X represents a bonding chain which is an arbitrary bonding chain excluding an ether bond, R1 to R4 each independently represents an arbitrary substituent, and n represents 0 or 1, and wherein a content ratio by weight of the ethylene-vinyl alcohol copolymer (A) to the polyamide-based resin (B) is 95/5 to 60/40.
Moreover, in the invention, preferable embodiments are those wherein the structural unit (1) is introduced into a main chain of the EVOH by copolymerization, a content of the structural unit (1) is 0.1 to 30% by mol in 10 the EVOH, a boron compound is contained therein, and so forth.

### Advantage of the Invention

Since the resin composition of the invention comprises EVOH (A) and a polyamide-based resin (B) and the EVOH (A) has a specific structural unit, a resin composition excellent in retort resistance at high temperature and gas barrier property and having good anti-pinhole property even after subjected to retort treatment as well as a multi-layer structure using the resin composition can be obtained.

### Brief Description of the Drawings

[FIG. 1] FIG. 1 is a ¹H-NMR chart of EVOH obtained in Polymerization Example 1 before saponification.
[FIG. 2] FIG. 2 is a ¹H-NMR chart of EVOH obtained in Polymerization Example 1.

### Best Mode for Carrying Out the Invention

The following will specifically explain the invention.
The EVOH (A) to be used in the invention is EVOH comprising the above structural unit (1), i.e., a structural unit having 1,2-glycol bond. As the bonding chain (X) that bonds the molecular chain and the 1,2-glycol bond structure, any bonding chain excluding an ether bond can be applied. The bonding chain is not particularly limited but there may be mentioned hydrocarbons such as alkylene, alkenylene, alkynylene, phenylene and naphthalene (these hydrocarbons may be substituted with halogens such as fluorine, chlorine and bromine), and also -CO-, -COCO-, -CO(CH₂)ₘCO-, -CO(C₆H₄)CO-, -S-, -CS-, -SO-, -SO₂-, -NR-, -CON-, -NRCO-, -CSNR-, -NRCS-, -NRNR-, -HPO₄-, -Si(OR)₂-, -OSi(OR)₂-, -OSi(OR)₂O-, -Ti(OR)₂-, -OTi(OR)₂-, -OTi(OR)₂O-, -Al(OR)-, -OAl(OR)-, -OAl(OR)O-, or the like (R each independently represents an arbitrary substituent, preferably a hydrogen atom or an alkyl group, and m is a natural number). An ether bond is not preferable because it is decomposed at melt molding and the thermal melt stability of the resin composition decreases. Of these, from the viewpoint of the thermal melt stability, alkylene is preferable as the binding species and alkylene having 5 or less carbon atoms is further preferable. From the viewpoint that gas barrier performance of the resin composition becomes satisfactory, the number of carbon atoms is preferably smaller and a structure wherein a 1,2-glycol bond structure, where n is 0, is directly bonded to a molecular chain is most preferable. Moreover, R1 to R4 can be an arbitrary substituent and are not particularly limited. From the viewpoint of easy availability of monomers, a hydrogen atom and an alkyl group are preferable. Furthermore, a hydrogen atom is preferable from the viewpoint of good gas barrier property of the resin composition.

The process for producing the EVOH (A) to be used in the invention is not particularly limited. However, for example, in the case of the most preferable structure in which the 1,2-glycol bond structure is bonded directly to a main chain, there may be mentioned a method of saponifying a copolymer obtained by copolymerizing 3,4-diol-1-butene, a vinyl ester-based monomer and ethylene; a method of saponifying a copolymer obtained by copolymerizing 3,4-diacyloxy-1-butene, a vinyl ester monomer and ethylene; a method of saponifying a copolymer obtained by copolymerizing 3-acyloxy-4-ol-1-butene, a vinyl ester-based monomer and ethylene; a method of saponifying a copolymer obtained by copolymerizing 4-acyloxy-3-ol-1-butene, a vinyl ester-based monomer and ethylene; a method of saponifying a copolymer obtained by copolymerizing 3,4-diacyloxy-2-methyl-1-butene, a vinyl ester-based monomer and ethylene; a method of saponifying a copolymer obtained by copolymerizing 2,2-dialkyl-4-vinyl-1,3-dioxolane, a vinyl ester-based monomer and ethylene; and a method of saponification and decarboxylation of a copolymer obtained by copolymerizing vinylethylene carbonate, a vinyl ester-based monomer and ethylene. As the process for preparing EVOH having alkylene as a bonding chain (X), there may be mentioned a method of saponifying a copolymer obtained by copolymerizing 4,5-diol-1-pentene, 4,5-diacyloxy-1-pentene, 4,5-diol-3-methyl-1-pentene, 4,5-diol-3-methyl-1-pentene, 5,6-diol-1-hexene, 5,6-diacyloxy-1-hexene or the like; a vinyl ester-based monomer; and ethylene. However, the method of saponifying a copolymer obtained by copolymerizing 3,4-diacyloxy-1-butene, a vinyl ester-based monomer and ethylene is preferable from the viewpoint that copolymerization reactivity is excellent, and as 3,4-diacyloxy-1-butene, use of 3,4-diacetoxy-1-butene is preferable. Also, a mixture of these monomers may be used. Furthermore, 3,4-diacetoxy-1-butane, 1.4-diacetoxy-1-butene, 1,4-diacetoxy-1-butane and the like may be contained as a small amount of impurities. Moreover, such copolymerization processes will be described below but are not limited thereto.

In this connection, 3,4-diol-1-butene is represented by the following formula (2), 3,4-diacyloxy-1-butene is represented by the following formula (3), 3-acyloxy-4-ol-1-butene is represented by the following formula (4) and 4-acyloxy-3-ol-1-butene is represented by the following formula (5).

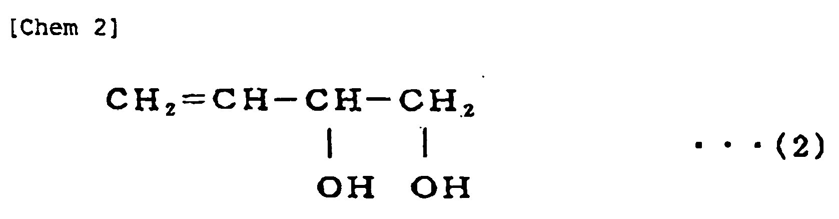

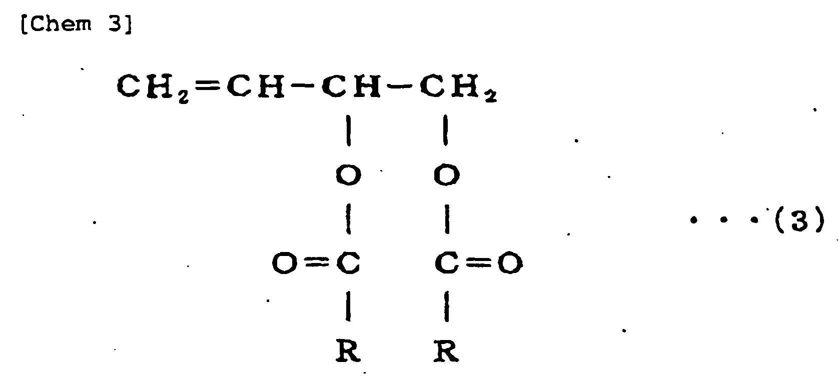

(wherein R is an alkyl group, preferably a methyl group)

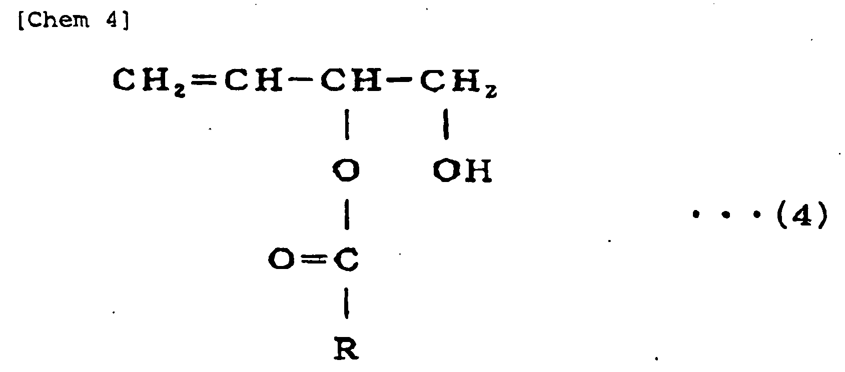

(wherein R is an alkyl group, preferably a methyl group)

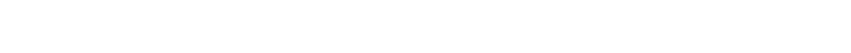

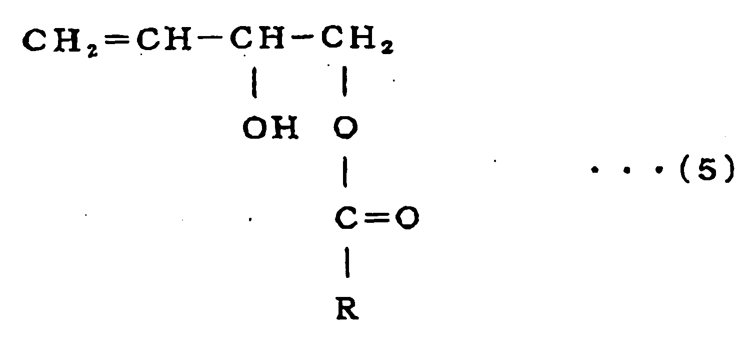

(wherein R is an alkyl group, preferably a methyl group)
The compound indicated by the above formula (2) is available from Eastman Chemical Company and the compound indicated by the above formula (3) is commercially available as products from Eastman Chemical Company and Across Inc.

As the vinyl ester-based monomer, there may be mentioned vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate and vinyl versatate. Of these, vinyl acetate is preferably used.

The method for copolymerizing 3,4-diacyloxy-1-butene, a vinyl ester-based monomer and ethylene is not particularly limited. Known methods such as bulk polymerization, solution polymerization, suspension polymerization, dispersion polymerization or emulsion polymerization can be employed, but usually solution polymerization is conducted.

The method for adding the monomer components at copolymerization is not particularly limited and any method such as adding all at once, adding divisionally, or adding continuously is adopted.
Moreover, as the method for introducing ethylene in the copolymer, it is sufficient to conduct usual ethylene-pressurized polymerization, and the introduction amount can be regulated by the pressure of ethylene. Depending on the objective ethylene content, the amount is not categorically determined but is usually selected from a range of 25 to 80 kg/cm².

As the solvent used for such copolymerization, there may be usually mentioned lower alcohols such as methanol, ethanol, propanol and butanol, and ketones such as acetone and methyl ethyl ketone. Methanol is suitably used from an industrial point of view.
The amount of the solvent to be used may be suitably selected in consideration of a chain transfer constant of the solvent, depending on the objective degree of polymerization of the copolymer. For example, when the solvent is methanol, it is selected from the range of S (solvent)/M (monomer) = 0.01 to 10 (weight ratio), preferably 0.05 to 7 (weight ratio).

A polymerization catalyst is used for copolymerization. As such a polymerization catalyst, there may be, for example, mentioned known radical polymerization catalysts such as azobisisobutyronitrile, acetyl peroxide, benzoyl peroxide and lauryl peroxide and catalysts active at low temperature such as peroxyesters including t-butylperoxyneodecanoate, t-butylperoxypivalate, α,α'-bis(neodecanoylperoxy)diisopropylbenzene, cumyl peroxyneodecanoate, 1,1,3,3-tetramethylbutyl peroxyneodecanoate, 1-cyclohexyl-1-methylethyl peroxyneodecanoate, t-hexyl peroxyneodecanoate and t-hexyl peroxypivalate; peroxydicarbonates including di-n-propyl peroxydicarbonate, di-iso-propyl peroxydicarbonate, di-sec-butyl peroxydicarbonate, bis(4-t-butylcyclohexyl) peroxydicarbonate, di-2-ethoxyethyl peroxydicarbonate, di(2-ethylhexyl) peroxydicarbonate, dimethoxybutyl peroxydicarbonate and di(3-methyl-3-methoxybutylperoxy) dicarbonate; and diacyl peroxides including 3,3,5-trimethylhexanoyl peroxide diisobutyryl peroxide and lauroyl peroxide. The amount of the polymerization catalyst to be used depends on the type of catalyst and is not categorically determined but is arbitrarily selected according to a polymerization rate. For example, in the case that azobisisobutyronitrile or acetyl peroxide is used, the amount is preferably 10 to 2000 ppm, particularly 50 to 1000 ppm, based on the vinyl ester-based monomer.
Also, the reaction temperature of the copolymerization reaction is preferably selected from the range of 40°C to a boiling point depending on the solvent to be used and the pressure.

In the invention, a hydroxylactone-based compound or hydroxycarboxylic acid is preferably included together with the catalyst, from the viewpoint that the color tone of the obtained resin composition is satisfactory (approaching to colorless). The hydroxylactone-based compound is not particularly limited as long as it is a compound having a lactone ring and a hydroxyl group in the molecule. For example, there may be mentioned L-ascorbic acid, erythorbic acid, gluconodeltalactone and the like, and L-ascorbic acid and erythorbic acid are suitably used. Moreover, as the hydroxycarboxylic acid, there may be mentioned glycolic acid, lactic acid, glyceric acid, malic acid, tartaric acid, citric acid, salicylic acid and the like, and citric acid is suitably used.

The amount of the hydroxylactone-based compound or hydroxycarboxylic acid is preferably 0.0001 to 0.1 part by weight (more preferably 0.0005 to 0.05 part by weight, particularly 0.001 to 0.03 part by weight) based on 100 parts by weight of the vinyl ester-based monomer, in the case of both a batch type and a continuous type. When the amount is less than 0.0001 part by weight, the effects of the co-presence cannot be sufficiently obtained and to the contrary, when the amount is more than 0.1 part by weight, polymerization of the vinyl ester-based monomer is inhibited, thus the cases being not preferable. The method for adding the compound into the polymerization system is not particularly limited, but usually the compound is diluted with a solvent such as a lower aliphatic alcohol (methanol, ethanol, propanol, tert-butanol), an aliphatic ester including the vinyl ester-based monomer (methyl acetate, ethyl acetate) or water or a mixed solvent thereof and then added into the polymerization system.

In this connection, the amount of 3,4-diacyloxy-1-butene or the like to be added may be determined depending on the desired amount of the above structural unit (1) to be introduced.

Also, in the invention, a copolymerizable ethylenically unsaturated monomer may be copolymerized at the above copolymerization within the range that the effects of the invention are not impaired. As such monomers, there may be mentioned olefins such as propylene, 1-butene and isobutene; unsaturated acids such as acrylic acid, methacrylic acid, crotonic acid, phthalic acid (anhydride), maleic acid (anhydride) and itaconic acid (anhydride) or salts thereof or mono- or di-alkyl esters having 1 to 18 carbon atoms; acrylamides such as acrylamide, N-alkylacrylamide having 1 to 18 carbon atoms, N,N-dimethylacrylamide, 2-acrylamidopropanesulfonic acid or salt thereof, acrylamidopropyldimethylamine or acid salts thereof or quaternary salts thereof; methacrylamides such as methacrylamide, N-alkylmethacrylamide having 1 to 18 carbon atoms, N,N-dimethylmethacrylamide, 2-methacrylamidopropanesulfonic acid or salts thereof, methacrylamidopropyldimethylamine, or acid salts thereof or quaternary salts thereof; N-vinylamides such as N-vinylpyrrolidone, N-vinylformamide and N-vinylacetoamide; vinyl cyanides such as acrylonitrile and methacrylonitrile; vinyl ethers such as alkyl vinyl ether having 1 to 18 carbon atoms, hydroxyalkyl vinyl ether and alkoxyalkyl vinyl ether; halogenated vinyls such as vinyl chloride, vinylidene chloride, vinyl fluoride, vinylidene fluoride and vinyl bromide; vinylsilanes; allyl acetate; allyl chloride; allyl alcohol; dimethylallyl alcohol; trimethyl-(3-acrylamide-3-dimethylpropyl)-ammonium chloride; acrylamido-2-methylpropanesulfonic acid; glycerin monoallyl ether; ethylene carbonate.

In addition, there may be also mentioned cation group-containing monomers such as N-acrylamidomethyltrimethylammonium chloride, N-acrylamidoethyltrimethylammonium chloride, N-acrylamidopropyltrimethylammonium chloride, 2-acryloxyethyltrimethylammonium chloride, 2-methacryloxyethyltrimethylammonium chloride, 2-hydroxy-3-methacryloyloxypropyltrimethylammonium chloride, allyltrimethylammonium chloride, methallyltrimethylammonium chloride, 3-butene-trimethylammonium chloride, dimethyldiallylammonium chloride and diethyldiallylammonium chloride, and acetoacetyl group-containing monomers.

Furthermore, as the vinylsilanes, there may be mentioned vinyltrimethoxysilane, vinylmethyldimethoxysilane, vinyldimethylmethoxysilane, vinyltriethoxysilane, vinylmethyldiethoxysilane, vinyldimethylethoxysilane, vinylisobutyldimethoxysilane, vinylethyldimethoxysilane, vinylmethoxydibutoxysilane, vinyldimethoxybutoxysilane, vinyltributoxysilane, vinylmethoxydihexyloxysilane, vinyldimethoxyhexyloxysilane, vinyltrihexyloxysilane, vinylmethoxydioctyloxysilane, vinyldimethoxyoctyloxysilane, vinyltrioctyloxysilane, vinylmethoxydilauryloxysilane, vinyldimethoxylauryloxysilane, vinylmethoxydioleyloxysilane, vinyldimethoxyoleyloxysilane.

Then, the copolymer obtained is then saponified but the saponification is carried out in a state in which the copolymer obtained in the above is dissolved in an alcohol or hydrous alcohol, using an alkali catalyst or an acid catalyst. As the alcohol, there may be mentioned methanol, ethanol, propanol, tert-butanol and the like but methanol is preferably used in particular. The concentration of the copolymer in the alcohol is suitably selected according to a viscosity of the system, but is usually selected from the range of 10 to 60% by weight. As the catalyst to be used for the saponification, there may be mentioned alkali catalysts such as hydroxides and alcoholates of alkali metals including sodium hydroxide, potassium hydroxide, sodium methylate, sodium ethylate, potassium methylate and lithium methylate; and acid catalysts such as sulfuric acid, hydrochloric acid, nitric acid, metasulfonic acid, zeolite and a cation-exchange resin.

The amount of the saponifying catalyst is suitably selected according to the saponifying method, the aimed degree of saponification, but when an alkali catalyst is used, the amount is suitably 0.001 to 0.1 equivalent and preferably 0.005 to 0.05 equivalent, based on a total amount of monomers such as the vinyl ester-based monomer and 3,4-diacyloxy-1-butene. Concerning the saponifying method, either of batch saponification, continuous saponification on a belt and column-type continuous saponification can be carried out in accordance with the aimed degree of saponification and the like, and column-type saponification under fixed pressurization is preferably used because the amount of the alkali catalyst can be reduced at the saponification and the saponification reaction easily proceeds at a high efficiency, and the like. Further, pressure at the saponification cannot be categorically said depending on the objective ethylene content, but is selected from the range of 2 to 7 kg/cm² and the temperature at that time is selected from 80 to 150°C and preferably from 100 to 130°C.

As described above, EVOH (A) having the above structural unit (1) (structural unit having 1,2-glycol bond) is obtained. In the invention, the ethylene content and the degree of saponification of the EVOH (A) obtained are not particularly limited, but it is preferable that the ethylene content is 10 to 60% by mol (further, 20 to 50% by mol, particularly 25 to 48% by mol) and the degree of saponification is preferably 90% by mol or more (further, 95% by mol or more). When the ethylene content is less than 10% by mol, the gas barrier property and appearance of the resulting molded articles at high humidity tend to be lowered and to the contrary, when it is more than 60% by mol, the gas barrier property of the molded articles tend to be lowered. Further, when the degree of saponification is less than 90% by mol, the gas barrier property, moisture resistance and the like of the molded articles tend to be lowered. Thus, the cases are not preferable.

Moreover, the amount of the structural unit having 1,2-glycol bond to be introduced into the EVOH (A) is not particularly limited, but 0.1 to 50% by mol (further 0.5 to 40% by mol, particularly 1 to 30% by mol) is preferable. When the amount to be introdueced is less than 0.1% by mol, the effect of the invention is not adequately exhibited and to the contrary, when it is more than 50% by mol, the gas barrier property tends to be lowered, thus the cases being not preferable. Further, when the amount of the structural unit having 1,2-glycol bond is adjusted, it can be also adjusted by blending at least two kinds of EVOH wherein the amount to be introduced of the structural unit having 1,2-glycol bond differs. There is no problem even if at least one of them does not have the structural unit having 1,2-glycol bond.
With regard to the EVOH where the amount of 1,2-glycol bond is thus adjusted, the amount of 1,2-glycol bond may be calculated as a weight average and also the ethylene content may be calculated as a weight average but accurately, the ethylene content and the amount of 1,2-glycol bond can be calculated based on the results of ¹H-NMR measurement to be mentioned below.

The EVOH (A) having the structural unit (1) obtained by such a process may be used as it is. However, from the viewpoint of improving the thermal stability of the resin, it is preferable to add acids such as acetic acid or phosphoric acid or its salt of a metal such as an alkali metal, an alkaline earth metal or a transition metal, or boric acid or its metal salt as a boron compound, within the range that the purpose of the invention are not impaired.

The amount of acetic acid to be added is preferably 0.001 to 1 part by weight (further, 0.005 to 0.2 part by weight, particularly 0.010 to 0.1 part by weight) based on 100 parts by weight of the EVOH (A) in the resin composition. When the amount to be added is less than 0.001 part by weight, the effect by comprising tends to be not obtained adequately and to the contrary, when it is more than 1 part by weight, the appearance of the resulting molded articles tends to be deteriorated, thus the cases being not preferable.

As the metal salt of boric acid, there may be mentioned calcium borate, cobalt borate, zinc borate (zinc tetraborate, zinc metaborate), potassium aluminum borate, ammonium borate (ammonium metaborate, ammonium tetraborate, ammonium pentaborate, ammonium octaborate), cadmium borate (cadmium orthoborate, cadmium tetraborate and the like), potassium borate (potassium metaborate, potassium tetraborate, potassium pentaborate, potassium hexaborate, potassium octaborate), silver borate (silver metaborate, silver tetraborate), copper borate (copper (II) borate, copper metaborate, copper tetraborate and the like), sodium borate (sodium metaborate, sodium diborate, sodium tetraborate, sodium pentaborate, sodium hexaborate, sodium octaborate), lead borate (lead metaborate, lead hexaborate and the like), nickel borate (nickel orthoborate, nickel diborate, nickel tetraborate, nickel octaborate), barium borate (barium orthoborate, barium metaborate, barium diborate, barium tetraborate), bismuth borate, magnesium borate (magnesium orthoborate, magnesium diborate, magnesium metaborate, trimagnesium tetraborate, pentamagnesium tetraborate), manganese borate (manganese (I) borate, manganese metaborate, manganese tetraborate), lithium borate (lithium metaborate, lithium tetraborate, lithium pentaborate), additionally, borate minerals such as borax, kernite, Inyoite, Kotoite, Suanite and Szaibelyite. Preferably, borax, boric acid and sodium borate (sodium metaborate, sodium diborate, sodium tetraborate, sodium pentaborate, sodium hexaborate, sodium octaborate) are mentioned.
Moreover, the amount of the boron compound to be added is preferably 0.001 to 1 part by weight (further, 0.002 to 0.2 part by weight, particularly 0.005 to 0.1 part by weight), in terms of boron, based on 100 parts by weight of the total of EVOH in the composition. When the amount to be added is less than 0.001 part by weight, the effect by comprising tends to be not obtained adequately and to the contrary, when it is more than 1 part by weight, the appearance of.the resulting molded articles tends to be deteriorated, thus the cases being not preferable.

Further, as the metal salt, there may be mentioned metal salts such as sodium, potassium, calcium and magnesium salts of organic acids such as acetic acid, propionic acid, butyric acid, lauric acid, stearic acid, oleic acid and behenic acid and inorganic acids such as sulfuric acid, sulfurous acid, carbonic acid and phosphoric acid. A salt of acetic acid, a salt of phosphoric acid and a salt of hydrogen phosphoric acid are preferable. Moreover, the amount of the metal salt to be added is preferably 0.0005 to 0.1 part by weight (further, 0.001 to 0.05 part by weight, particularly 0.002 to 0.03 part by weight), in terms of metal, based on 100 parts by weight of EVOH (A) in the resin composition. When the amount to be added is less than 0.0005 part by weight, the effect by comprising tends to be not obtained adequately and to the contrary, when it is more than 0.1 part by weight, the appearance of the resulting molded articles tends to be deteriorated, thus the cases being not preferable.
Further, when two or more kinds of the salts of alkali metal and/or alkaline earth metal are added to EVOH, the total amount thereof preferably falls within the range of the above amount.

The method of adding acids or its metal salt to the EVOH (A) is not particularly limited and includes (1) a method of bringing porous precipitates of the EVOH (A) having a water content of 20 to 80% by weight into contact with an aqueous solution of the acids or its metal salt to incorporate the acid or its metal salt therein and then drying; (2) a method of incorporating the acids or its metal salt into a homogeneous solution (water/alcohol solution) of the EVOH (A), then extruding the mixture in a strand shape into a coagulation solution, then cutting the obtained strand to form pellets, and further subjecting them to a drying treatment; (3) a method of collectively mixing the EVOH (A) with the acids or its metal salt and then melt-kneading the mixture by means of an extruder; (4) a method of collectively mixing the resin composition with the acids or its metal salt and then melt-kneading the mixture by means of an extruder (5) a method of neutralizing alkali (sodium hydroxide, potassium hydroxide) used in the saponifying step with acids such as acetic acid at the production of the EVOH (A) and adjusting the amount of remaining acid such as acetic acid and an alkali metal salt such as sodium acetate or potassium acetate that is formed as a by-product, by a treatment of water rinsing. In order to more remarkably obtain the effect of the invention, the methods of (1), (2) and.(5) that are superior in dispersibility of the acids or its metal salt are preferable.

After the addition of the salt or the metal salt, the EVOH composition (A) obtained by the above method of (1), (2) or (5) is then dried.
As the drying method, various drying methods can be adopted. For example, there are mentioned fluidized drying by which the substantially pellet form EVOH is stirred and dispersed mechanically or with hot wind; and static drying by which the substantially pellet form EVOH is performed without providing dynamic action such as stirring and dispersion. A drier for carrying out the fluidized drying includes a columnar groove type stirring drier, a column tube drier, a rotary drier, a fluidized bed drier, a vibration fluidized bed drier, a cone rotary drier. Further, a drier for carrying out the static drying includes a batch type box drier as material static type, a band drier, a tunnel drier and a vertical drier as a material transfer type, and the like, but is not limited thereto. The fluidized drying and the static drying can be carried out in combination.

Air or inert gas (nitrogen, helium gas, argon gas) is used as heating gas used at the drying treatment. The temperature of the heating gas is preferably 40 to 150°C from the viewpoints of productivity and the prevention of thermal degradation of the EVOH. Usually, the time for the drying treatment is preferably about 15 minutes to 72 hours depending on the water content of the EVOH and the treating amount thereof from the viewpoints of productivity and the prevention of thermal degradation of the EVOH.

The EVOH composition (A) is subjected to a drying treatment under the above conditions. The water content after the drying treatment is preferably 0.001 to 5% by weight (further 0.01 to 2% by weight, particularly 0.1 to 1 part by weight). When the water content is less than 0.001% by weight, long-run moldability tends to be lowered and to the contrary, when it is more than 5% by weight, there is a possibility that foam may be generated at extrusion molding.

The above EVOH composition (A) may comprise a little amount of residual monomers (3,4-diol-1-butene, 3,4-diacyloxy-1-butene, 3-acyloxy-4-ol-1-butene, 4-acyloxy-3-ol-1-butene, 4,5-diol-1-pentene, 4,5-diacyloxy-1-pentene, 4,5-diol-3-methyl-1-pentene, 4,5-diol-3-methyl-1-pentene, 5,6-diol-1-hexene, 5,6-diacyloxy-1-hexene, 4,5-diacyloxy-2-methyl-1-butene) and the saponified product of the monomers (3,4-diol-1-butene, 4,5-diol-1-pentene, 4,5-diol-3-methyl-1-pentene, 4,5-diol-3-methyl-1-pentene, 5,6-diol-1-hexene), within the range that the purpose of the invention is not inhibited.

Further, it is also preferable that EVOH to be used in the invention is a blend of EVOH comprising the structural unit (1) and the other EVOH different from this EVOH from the viewpoint that the gas barrier property and pressure resistance are improved. As such other EVOH, EVOH different in structural unit, EVOH different in ethylene content, EVOH different in degree of saponification, EVOH different in molecular weight, and the like may be mentioned.
As the EVOH different in structural unit from the EVOH having the structural unit (1), there may be, for example, mentioned EVOH consisting of an ethylene structural unit and a vinyl alcohol structural unit and modified EVOH having a functional group such as 2-hydroxyethoxy group in a side chain may be mentioned.
Moreover, in the case that EVOH different in ethylene content is used, the structural unit may be the same or different but the difference of the ethylene content is preferably 1% by mol or more (further 2% by mol or more, particularly 2 to 20% by mol). When the difference of the ethylene content is too large, the transparency becomes bad in some cases, thus the case being not preferable.

A melt flow rate (MFR) (210°C, a load of 2160 g) of the EVOH composition (A) thus obtained is not particularly limited, but is preferably 0.1 to 100 g/10 minutes (further 0.5 to 50 g/10 minutes, particularly 1 to 30 g/10 minutes). When the melt flow rate is less than the range, an inside of an extruder becomes a high torque state at molding and extrusion molding tends to be difficult.. Further, when it is larger than the range, the appearance and the gas barrier property at the thermal stretching molding tend to be lowered. Thus, the cases are not preferable.

The following will describe the polyamide-based resin (B) to be used in the invention.
As the polyamide-based resin (B) to be used in the invention, there may be specifically mentioned polycapramide (Nylon 6), poly-ω-aminoheptanoic acid (Nylon 7), poly-ω-aminononanoic acid (Nylon 9), polyundecanamide (Nylon 11), polylauryllactam (Nylon 12), polyethylenediamineadipamide (Nylon 26), polytetramethyleneadipamide (Nylon 46), polyhexamethyleneadipamide (Nylon 66), polyhexamethylenesebacamide (Nylon 610), polyhexamethylenedodecamide (Nylon 612), polyoctamethyleneadipamide (Nylon 86), polydecamethyleneadipamide (Nylon 108), a caprolactam/lauryllactam copolymer (Nylon 6/12), a caprolactam/ω-aminononanoic acid copolymer (Nylon 6/9), a caprolactam/hexamethylenediammonium adipate copolymer (Nylon 6/66), a lauryllactam/hexamethylenediammonium adipate copolymer (Nylon 12/66), an ethylenediamineadipamide/hexamethylenediammonium adipate copolymer (Nylon 26/66), a caprolactam/hexamethylenediammonium adipate/hexamethylenediammonium sebacate copolymer (Nylon 66/610), an ethyleneammonium adipate/hexamethylenediammonium adipate/hexamethylenediammonium sebacate copolymer (Nylon 6/66/610), polyhexamethyleneisophthalamide, polyhexamethyleneterephthalamide, a hexamethyleneisophthalamide/terephthalamide copolymer, or those obtained by modifying these polyamide-based resins with an aromatic amine such as methylenebenzylamine or metaxylenediamine, metaxylylenediammonium adipate. In the invention, polyamide-based resins whose terminal is adjusted with a carboxyl group or an amino group are suitably used.

As the terminal-controlled polyamide-based resin (B), there is used a polyamide-based resin (B) wherein capramide is included as a main constitutional unit and it is adjusted using a terminal controlling agent so that a terminal carboxyl group content [X] and a terminal amino group content [Y] satisfy an equation of {(100×[Y])/([X]+[Y])}≥5 (wherein each of units of [X] and [Y] is µeq/g·polymer).

As the terminal controlling agent in the above, there is used a carboxylic acid having 2 to 23 carbon atoms or a diamine having 2 to 20 carbon atoms. As the monocarboxylic acid having 2 to 23 carbon atoms, there may be mentioned aliphatic monocarboxylic acids (acetic acid, propionic acid, butyric acid, valeric acid, caproic acid, enanthic acid, caprylic acid, capric acid, pelargonic acid, undecanoic acid, lauric acid, tridecanoic acid, myristic acid, myritoleic acid, palmitic acid, stearic acid, oleic acid, linolic acid, arachidic acid, behenic acid, etc.), alicyclic monocarboxylic acid (cyclohexanecarboxylic acid, methylcyclohexanecarboxylic acid, etc.), aromatic monocarboxylic acid (benzoic acid, toluic acid, ethylbenzoic acid, phenylacetic acid, etc.).

As the diamine having 2 to 20 carbon atoms, there may be mentioned aliphatic diamines [ethylenediamine, trimethylenediamine, tetramethylenediamine, pentamethylenediamine, hexamethylenediamine, octamethylenediamine, decamethylenediamine, dodecamethylenediamine, hexadecamethylenediamine, 2,2,4-(or 2,4,4-)trimethylhexamethylenediamine, etc.], alicyclic diamines [cyclohexanediamine, bis-(4,4'-aminocyclohexyl)methane, etc.], aromatic diamines (xylylenediamine etc.).

Moreover, other than the above monocarboxylic acids, aliphatic dicarboxylic acids (malonic acid, succinic acid, glutaric acid, adipic acid, pimellic acid, suberic acid, azelaic acid, sebacic acid, dodecanedioic acid, tetradecanedioic acid, hexadecanedioic acid, hexadecenedioic acid, octadecanedioic acid, octadecenedioic acid, eicosadioic acid, eicosenedioic acid, docosanedioic acid, 2,2,4-trimethyladipic acid, etc.), alicyclic dicarboxylic acids (1,4-cyclohexanedicarboxylic acid etc.), aromatic dicarboxylic acids (terephthalic acid, isophthalic acid, phthalic acid, xylylenedicarboxylic acid, etc.), can be used or can be used in combination.

A degree of polymerization of the polyamide-based resin (B) is not particularly limited but is preferably 1.7 to 5.0, particularly 2.0 to 5.0 as a relative viscosity determined in accordance with JIS K6810.

As the method of polymerization for the polyamide-based resin (B), melt polymerization, interfacial polymerization, solution polymerization, bulk polymerization, solid-phase polymerization, or a method wherein these methods are combined can be adopted.
Further, as a material of a polyamide, ε-caprolactam is particularly preferable from the viewpoint that better boiling resistance and retort resistance are obtained.

The resin composition of the invention comprises the above EVOH (A) and the polyamide-based resin (B). The content ratio of the EVOH (A) to the polyamide-based resin (B) in the resin composition is not particularly limited but is preferably 95/5 to 60/40 (95/5 to 65/35, particularly 90/10 to 70/30) (weight ratio). When the content ratio exceeds 95/5, the appearance and gas barrier property after retort treatment tend to be lowered and to the contrary, when it is less than 60/40, gas barrier property tend to be lowered, thus the cases being not preferable.

The method of blending EVOH (A) with the polyamide-based resin (B) for obtaining the resin composition of the invention is not particularly limited but a method of melt-mixing is preferable from the viewpoint that homogeneous mixing is possible.

Example of the method of melt-mixing is a method of carrying out using a known kneading device such as a kneader ruder, an extruder, a mixing roll, a Banbury mixer or a plast mill, but it is usually industrially preferable to use a single-screw or twin-screw extruder. Further, it is preferable to provide a vent suction device, a gear pump device, a screen device, if necessary. In particular, the resin composition having excellent quality in which thermal coloring and thermal degradation are reduced, can be obtained by providing 1 or more of vent holes in the extruder and subjecting to suction under reduced pressure in order to remove moisture and byproducts (thermally decomposed low-molecular-weight articles and the like) and by continuously feeding inert gas such as nitrogen in a hopper in order to prevent the incorporation of oxygen into the extruder.

Further, the method of feeding respective resins to the extruder is not particularly limited, and includes (1) a method of dry-blending the EVOH (A) and the polyamide-based resin (B) and collectively feeding them to the extruder, (2) a method of feeding either the EVOH (A) or the polyamide-based resin (B) to the extruder to be melt and feeding other solid one thereto (solid side feeding method), (3) a method of feeding either the EVOH (A) or the polyamide-based resin (B) to the extruder to be melt and feeding other one in a melt state thereto (melt side feeding method), and the like. Among these, the method of (1) is industrially used practically from the viewpoints of the convenience of the device, the cost of blended articles.

The thus obtained resin composition of the invention can be subjected to melt molding or the like as it is. However, in the invention, the resin composition may be mixed with a lubricant such as saturated aliphatic amide (for example, stearic acid amide), unsaturated fatty acid amide (for example, oleic amide or the like), bis-fatty acid amide (for example, ethylene bis (stearic acid amide)), a metal salt of fatty acid (for example, calcium stearate, magnesium stearate or the like) or low-molecular-weight polyolefin (for example, low molecular weight polyethylene with a molecular weight of about 500 to 10,000, low molecular weight polypropylene); an inorganic salt (for example, hydrotalcite); a plasticizer (for example, aliphatic polyhydric alcohol such as ethylene glycol, glycerin or hexanediol); an oxygen absorbent (for example, as an inorganic-type oxygen absorbent, a reduced iron powder, one in which a water-absorbing substance, an electrolyte and the like are added thereto, an aluminum powder, potassium sulfite, photo-catalyst titanium oxide; as an organic compound-type oxygen absorbent, ascorbic acid, a fatty acid ester thereof, a metal salt thereof or the like, polyhydric phenol such as hydroquinone, gallic acid or a hydroxyl group-containing phenol aldehyde resin, a coordinate complex of a nitrogen-containing compound with a transition metal such as bis-salicylaldehyde-imine cobalt, tetraethylenepentamine cobalt, a cobalt-Schiff base complex, porphyrins, a macrocyclic polyamine complex and a polyethyleneimine-cobalt complex, a terpene compound, a reaction product of amino acids with a hydroxyl group-containing reductive substance and a triphenylmethyl compound; as a polymer-type oxygen absorbent, a coordinate complex of a nitrogen-containing resin with a transition metal (example: a combination of MXD Nylon with cobalt), a blend of a tertiary hydrogen-containing resin with a transition metal (example: a combination of polypropylene with cobalt), a blend of a carbon-carbon unsaturated bond-containing resin with a transition metal (example: a combination of polybutadiene with cobalt), a photooxidation degradative resin (example: polyketone), an anthraquinone polymer (example: polyvinylanthraquinone) or the like, and those in which a photoinitiator (benzophenone or the like), a peroxide-trapping agent (a commercially available antioxidant) or a deodorant (active carbon) are added to the blend; a thermal stabilizer; a photo stabilizer; an antioxidant; an ultraviolet absorbent; a coloring agent; an antistatic agent; a surfactant; an antibiotics; an anti-blocking agent; a slipping agent; a filler (for example, an inorganic filler); other resin (for example, a polyolefin or the like); or the like, within the range that the purpose of the invention is not inhibited.

Thus, the resin composition of the invention is obtained and the resin composition is useful for molded articles and in particular, is useful for melt molding. The following will describe the melt molding.
As the molded articles, there may be mentioned single- or multi-layer (laminated layer) films and sheets, containers, tubes and the like. As the lamination method at the lamination with other substrate, there may be mentioned a method of laminating other substrate through melt-extrusion on the film, sheet and the like of the resin composition of the invention; to the contrary, a method of laminating the resin through melt-extrusion on other substrate; a method of co-extruding the resin and other substrate; a method of dry-laminating the resin (layer) and other substrate (layer) using a known adhesive such as an organotitanium compound, an isocyanate compound, a polyester-based compound or a polyurethane compound; and the like. Among these, the method of co-extrusion is preferable because a multi-layer structure (laminate) can be conveniently produced.

As the co-extrusion method, specifically, a known method such as a multi manifold die method, a feed block method, a multi slot die method or a die external adhesion method can be adopted. As the shape of dice, a T-dice and a round dice can be used but the T-dice is preferable from the viewpoint that stretching ability can be more improved by rapid cooling immediately after film formation. Moreover, a film formation rate is preferably 10 to 200 m/minute in view of the productivity and the stability of film physical properties. Further, a melt molding temperature at the melt extrusion is preferably 150 to 300°C.

As such other substrate, a thermoplastic resin is useful. Specifically, there may be mentioned homo- or copolymers of olefin such as linear low density polyethylene, low density polyethylene, ultra low density polyethylene, middle density polyethylene, high density polyethylene, an ethylene-vinyl acetate copolymer, an ionomer, an ethylene-propylene (block and random) copolymer, an ethylene-acrylic acid copolymer, an ethylene-acrylate ester copolymer, polypropylene, a propylene-α-olefin (α-olefin having 4 to 20 carbon atoms) copolymer, polybutene and polypentene, or broad-sense polyolefin-based resins such as polymers modified by grafting unsaturated carboxylic acid or its ester onto these homo- or copolymers of olefin, polyester-based resins, polyamide-based resins (including copolymerization polyamide), polyvinyl chloride, polyvinylidene chloride, acryl-based resins, polystyrene, vinyl ester-based resins, polyester elastomer, polyurethane elastomer, chlorinated polyethylene, chlorinated polypropylene, aromatic or aliphatic polyketone, polyalcohols obtained by reducing them, additionally, other EVOH, etc. From the viewpoints of the practicability such as physical properties (in particular, strength) of laminates, polypropylene, an ethylene-propylene (block and random) copolymer, polyamide, polyethylene, an ethylene-vinyl acetate copolymer, polystyrene, polyethylene terephthalate (PET) and polyethylene naphthalate (PEN) are preferably used.

Further, when other substrate is coated by extrusion on the molded articles such as films, sheets and stretched films of the resin composition of the invention or a film, sheet or the like of other substrate is laminated on the molded articles of the invention using an adhesive, arbitrary substrates (paper, metal foil, uniaxially or biaxially stretched plastic film or sheet and an inorganic substance-deposited article, fabric, non-woven fabric, metal cotton, wooden article) other than the above-mentioned thermoplastic resin can be used as the substrate.

As the layer composition of the laminate, when the layer of the resin composition of the invention is referred to as a (a1, a2, ... ) and other substrate, for example, a thermoplastic resin layer is referred to as b (b1, b2, ..), not only the double layer structure of a/b but also arbitrary combinations such as b/a/b, a/b/a, a1/a2/b, a/b1/b2, b2/b1/a/b1/b2 and b2/b1/a/b1/a/b1/b2 are possible if the molded article is film, sheet or bottle shape. Further, when a regrind layer comprising a mixture of at least the EVOH composition and the thermoplastic resin is referred to as R, b/R/a, b/R/a/b, b/R/a/R/b, b/a/R/a/b, b/R/a/R/a/R/b and the like are also possible and arbitrary combinations such as bimetal type for a, b, a core (a)-sheath (b) type, a core (b)-sheath (a) type or eccentric core sheath type are possible for filament shape. Further, in the above layer composition, an adhesive resin layer may be provided at respective interlayers, if necessary. As the adhesive resin, various resins can be used and it differs depending on the kind of the resin of b and cannot be categorically mentioned. However, a modified olefin-based polymer containing a carboxyl group obtained by chemically bonding an unsaturated carboxylic acid or its anhydride with an olefin-based polymer (the above broad-sense polyolefin-based resin) by addition reaction or graft reaction can be mentioned. Specifically, there may be preferably mentioned a mixture of one or two or more of polymers selected from maleic anhydride graft modified polyethylene, maleic anhydride graft modified polypropylene maleic anhydride graft modified ethylene-propylene (block or random) copolymer, maleic anhydride graft modified ethylene-ethyl acrylate copolymer, maleic anhydride graft modified ethylene-vinyl acetate copolymer and the like. The amount of the unsaturated carboxylic acid or its anhydride contained in the thermoplastic resin is preferably 0.001 to 3% by weight, more preferably 0.01 to 1% by weight and particularly preferably 0.03 to 0.5% by weight. When the modified amount in the modified product is little, adhesiveness is occasionally inadequate, and to the contrary, when it is much, crosslinking reaction occurs and moldability is occasionally deteriorated, thus these cases being not preferable. As these adhesive resins, the EVOH composition of the invention, other EVOH, rubber-elastomer components such as polyisobutylene and an ethylene-propylene rubber, the resin of the b layer and the like can be blended with these adhesive resins. In particular, the adhesiveness is occasionally improved by blending a polyolefin-based resin different from the polyolefin resin that is a main component of the adhesive resin and thus the blending is useful.

Moreover, preferably, the resin composition is present as an intermediate layer and the polyolefin resin is present on the inner side of the layer in view of good appearance after retorting. A polyamide-based resin layer is preferably provided adjacent to at least one side of the resin composition layer in view of good gas barrier performance immediately after retorting.

The thickness of the respective layers of the laminate is not categorically mentioned depending on the layer composition, the kind of b, uses, container shape, requested physical properties and the like, but the layer a is usually selected from the range of about 2 to 500 µm (further, 3 to 200 µm), the layer b is selected from the range of 10 to 5000 µm (further, 30 to 1000 µm), and the adhesive resin layer is selected from the range of about 1 to 400 µm (further, 2 to 150 µm).

Further, the substrate resin layer may comprise an antioxidant, an antistatic agent, a lubricant, a nuclear material, an antiblocking agent, an ultraviolet absorbent, wax and the like that are hitherto known.

The laminate is used as it is for those having various shapes. Further, in order to improve physical properties of the laminate and to mold it into an objective arbitrary container shape, a heat-stretching treatment is also preferably conducted. The heating-stretching treatment means an operation by which a laminate in a film, sheet or parison shape thermally uniformly heated is uniformly molded into a cup, a tray, a tube, a bottle and a film shape by a chuck, a plug, vacuum force, pneumatic force, blow. The stretching may be either of uniaxial stretching or biaxial stretching, and a stretch-molded article that has good physical properties, does not generate pin holes, cracks, stretching unevenness or uneven thickness, delamination and the like at stretching and is superior in gas barrier property is obtained by carrying out the stretching at magnification as high as possible.
The stretching of the laminate may be either of uniaxial stretching or biaxial stretching, and stretching at a stretching rate as high as possible results in improved physical properties. In the case of the uniaxial stretching, a stretching rate of 5 times or more, particularly 10 times or more is preferable, and in the case of the biaxial stretching, an areal stretching rate of 5 times or more, particularly 10 times or more is preferable from the viewpoint of physical properties. In the invention, an areal stretching rate of 20 times or more, particularly 24 to 50 times is possible, and even at that rate, there is obtained a stretched film, a stretched sheet, without pinholes, cracks, or stretching unevenness at stretching.

As the stretching method, there can be adopted a roll stretching method, a tenter stretching method, a tubular stretching method, a stretch blow method, and also a molding method having a high stretching rate among deep-draw molding, vacuum molding and the like. In case of the biaxial stretching, either of a simultaneous biaxial stretching mode and a successive biaxial stretching mode can be adopted. The stretching temperature is selected from the range of 80 to 170°C, preferably about 100 to 160°C.

Heat setting is conducted after the stretching. The heat setting may be performed by any known method, and the stretched film is heat-treated at 80 to 170°C, preferably at 100 to 160°C, for approximately 2 to 600 seconds with maintaining the film in a tense state. The obtained stretched film may be further subjected to cooling treatment, rolling treatment, printing treatment, dry-lamination treatment, solution- or melt-coating treatment, bag-forming treatment, deep-draw processing treatment, box-forming treatment, tube processing treatment, split processing treatment, as needed.

The thus obtained laminate may have arbitrary shape, which may be, for example, a film, a sheet, a tape, a cup, a tray, a tube, a bottle, a pipe, a filament, a profile extruded article, and the like. The obtained laminate may be further subjected to heating treatment, cooling treatment, rolling treatment, printing treatment, dry-lamination treatment, solution- or melt-coating treatment, bag-forming treatment, deep-draw processing treatment, box-forming treatment, tube processing treatment, split processing treatment, as needed.

The thus obtained containers consisting of cups, trays, tubes, bottles, pouches or bugs, or bugs or cap members made of the stretched film are useful as various containers for general foods as well as seasonings such as mayonnaise and dressing, fermented foods such as soybean paste (miso), oil or fat foods such as salad oil, drinks, cosmetics, pharmaceuticals, detergents, perfumes, agricultural chemicals, fuels.
In particular, the resin composition of the invention is useful for retort uses.

### Examples

Hereinafter, the invention is specifically described with reference to Examples. In the following, "%" is represented on a weight basis unless otherwise indicated.

### Polymerization Example 1

An EVOH composition (A1) was obtained by the following method.
Into a 1 m³ polymerization reactor having a cooling coil, 500 kg of vinyl acetate, 100 kg of methanol, 500 ppm (based on vinyl acetate) of acetyl peroxide, 20 ppm of citric acid and 14 kg of 3,4-diacetoxy-1-butene were added. After the system was replaced once with nitrogen gas, the system was replaced with ethylene and ethylene was introduced under pressure to achieve an ethylene pressure of 35 kg/cm². After stirring, temperature was raised to 67°C and polymerization was carried out for 6 hours until polymerization rate reached 50% while adding 3,4-diacetoxy-1-butene at a rate of 15 g/min in a total amount of 4.5 kg. Then, the polymerization reaction was stopped to obtain an ethylene-vinyl acetate copolymer having an ethylene content of 29% by mol.

A methanol solution of the ethylene-vinyl acetate copolymer was fed at a speed of 10 kg/hr from the tower top portion of a shelf stage tower (saponifying tower) and a methanol solution comprising 0.012 equivalent of sodium hydroxide based on the remaining acetic acid group in the copolymer was simultaneously fed from the tower top portion. On the other hand, methanol was fed at 15 kg/hr from the tower lower portion. Temperature in the tower was 100 to 110°C and the pressure of the tower was 3 kg/cm²G. A methanol solution (30% of EVOH and 70% of methanol) of EVOH comprising a structural unit having 1,2-glycol bond was taken out from 30 minutes after the start of the adding. The degree of saponification of a vinyl acetate component of the EVOH was 99.5% by mol.

Then, the obtained methanol solution of the EVOH was fed at 10 kg/hr from the tower top portion of a methanol/aqueous solution preparation tower, methanol vapor at 120°C and water vapor were respectively added at 4 kg/hr and 2.5 kg/hr from the tower lower portion, methanol was distilled off at 8 kg/hr from the tower top portion, and 6 equivalents of methyl acetate based on the amount of sodium hydroxide used in the saponification was simultaneously added from the tower middle portion of the tower at an inner tower temperature of 95 to 110°C to obtain a water/alcohol solution of EVOH (a resin concentration of 35%) from the tower bottom portion.

The obtained water/alcohol solution of the EVOH was extruded in a strand shape from a nozzle having a hole diameter of 4 mm into a coagulation solution vessel kept at 5°C that comprises 5% of methanol and 95% of water and the strand shape article was cut with a cutter after completion of the coagulation to obtain porous pellets of EVOH having a diameter of 3.8 mm, a length of 4 mm and a water content of 45%.
After the porous pellets were rinsed with water so that 100 parts of water was used based on 100 parts of the porous pellets, they were added into a mix solution comprising 0.032% of boric acid and 0.007% of calcium dihydrogen phosphate and the mixture was stirred at 30°C for 5 hours. The porous pellets were further dried for 12 hours by passing nitrogen gas having a water content of 0.6% at a temperature of 70°C in a batch type aeration box drier, the water content being reduced to 30%. Then, they were dried for 12 hours with nitrogen gas having a water content of 0.5% at a temperature of 120°C using a batch type tower fluidized bed drier to obtain pellets of the objective EVOH composition (A1). The pellets contained boric acid and calcium dihydrogen phosphate in an amount of 0.015 part by weight (in terms of boron) and 0.005 part by weight (in terms of phosphate radical) respectively based on 100 parts by weight of EVOH. The MFR (210°C, 2160 g) was 4.0 g/10 min.

Further, when the amount of 1,2-glycol bond introduced therein was calculated after the ethylene-vinyl acetate copolymer before saponification was measured on ¹H-NMR (internal standard substance: tetramethylsilane, solvent: d6-DMSO), the amount was 2.5% by mol. On this occasion, "AVANCE DPX400" manufactured by Bruker Japan Co., Ltd. was used for NMR measurement.

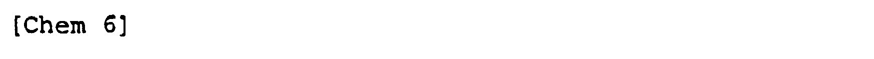

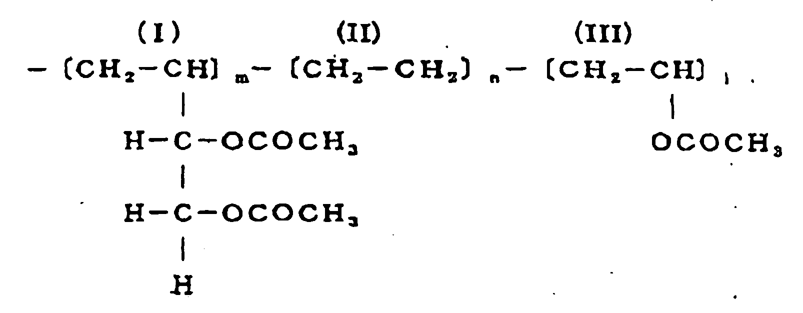

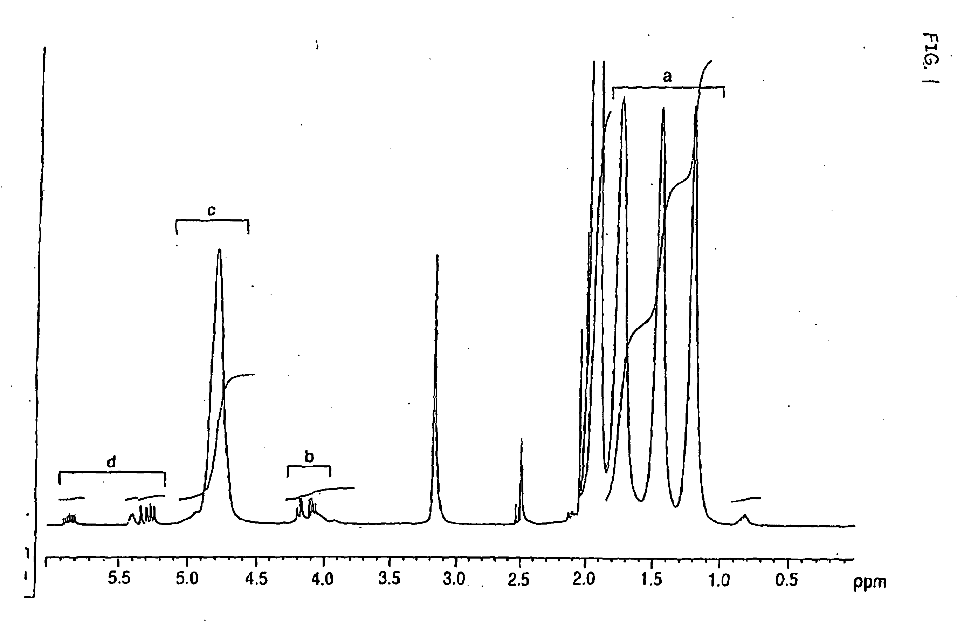

[¹H-NMR] (see FIG. 1)
1.0 to 1.8 ppm: Methylene proton (integration value a in FIG. 1)
1.87 to 2.06 ppm: Methyl proton
3.95 to 4.3 ppm: Proton at methylene side of structure (I) + proton of unreacted 3,4-diacetoxy-1-butene (integration value b in FIG. 1)
4.6 to 5.1 ppm: Methine proton + proton at methine side of structure (I) (integration value c in FIG. 1)
5.2 to 5.9 ppm; Proton of unreacted 3,4-diacetoxy-1-butene (integration value d in FIG. 1)

### [Calculation Method]

Since 4 protons exist at 5.2 to 5.9 ppm, the integration value of one proton is d/4. Since the integration value b is an integration value in which the protons of the diol and the monomer are included, the integration value (A) of one proton of the diol is A=(b-d/2)/2. Since the integration value c is an integration value in which the protons of the vinyl acetate side and the diol side are included, the integration value (B) of one proton of vinyl acetate is B=1-(b-d/2)/2. Since the integration value a is an integration value in which ethylene and methylene are included, the integration value (C) of one proton of ethylene is calculated as C=(a-2×A-2×B)/4=(a-2)/4. The amount of the structural unit (1) introduced was calculated from 100×{A/(A+B+C)}=100×(2×b-d)/(a+2).

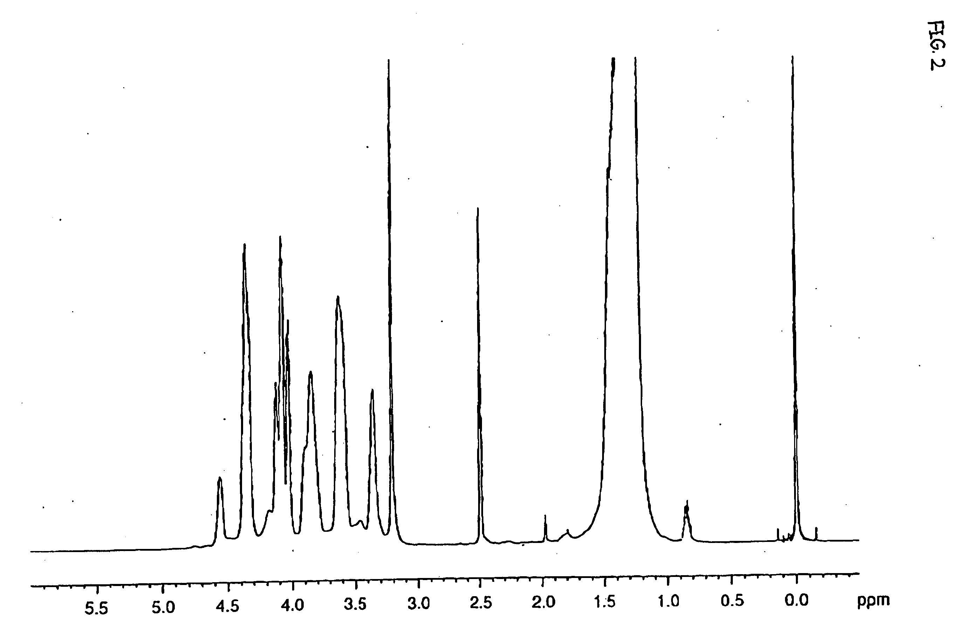

Further, FIG. 2 shows the result in which ¹H-NMR measurement was also carried out similarly with respect to EVOH after saponification. Since a peak corresponding to methyl proton at 1.87 to 2.06 ppm is greatly decreased, it is obvious that 3,4-diacetoxy-1-butene copolymerized is also saponified and converted to 1,2-glycol structure.

### Polymerization Example 2

An EVOH composition (A2) was obtained by the following method.
Polymerization was carried out similarly while adding 3,4-diacetoxy-1-butene at a rate of 26 g/min in a total amount of 8 kg in Polymerization Example 1 to obtain an EVOH composition (A2) having an ethylene content of 29% by mol and an introduction amount of a structural unit having 1,2-glycol bond of 3.0% by mol, wherein 0.015 part by weight (in terms of boron) of boric acid and 0.005 part by weight (in terms of phosphate radical) of calcium dihydrogen phosphate was contained and MFR was 3.7 g/10 min.

### Polymerization Example 3

An EVOH composition (A3) was obtained by the following method.
Similar operations were conducted except that a mixture of 3,4-diacetoxy-1-butene, 3-acetoxy-4-ol-1-butene, and 1,4-diacetoxy-1-butene in a ratio of 70:20:10 was used in place of 3,4-diacetoxy-1-butene in Polymerization Example 1 to obtain an EVOH composition (A3) having an introduction amount of a structural unit having 1,2-glycol bond of 2.0% by mol and an ethylene content of 29% by mol, wherein the content of boric acid was 0.015 part by weight (in terms of boron), 0.005 part by weight (in terms of phosphate radical) of phosphoric acid was contained and MFR was 3.7 g/10 min.

Separately, there was prepared an EVOH composition (A4) having no structural unit (1), an ethylene content of 29% by mol, a degree of saponification of 99.5% by mol and MFR of 3,5 g/10 min (210°, 2160 g), wherein the content of boric acid was 0.015 part by weight (in terms of boron) and 0.005 part by weight (in terms of phosphate radical) of phosphoric acid was contained.

### Example 1

The EVOH composition (A1) obtained in the above and a terminal-blocked Nylon (B) [terminal carboxyl group content of 20 µeq/g, terminal amino group content of 26 µeq/g] were added into a 30 mmφ twin-screw extruder so that a mixing ratio by weight was 85:15 and the whole was melt-mixed at 240°C to obtain pellets of an objective resin composition.

The pellets (resin composition) (a) obtained in the above, Nylon-6 ["NOVAMID 1022-1" manufactured by Mitsubishi Engineering-Plastics Corporation] (b), polypropylene ["FL6CK" manufactured by Japan Polychem Corporation] (c) and an adhesive resin ["ADMER QF500" manufactured by Mitsui Chemicals Inc., maleic anhydride-modified polypropylene] (d) were fed into a feed block-type co-extrusion multi-layer film molding machine (manufactured by Gunze Sangyo) to form a laminate (multi-layer film) having a layer constitution of (b)/(a)/(d)/(c)=20/20/10/80 (µm; thickness).

For the resulting laminate, as mentioned below, the appearance, gas barrier property and anti-pinhole property after retort treatment were evaluated as follows.

### (Appearance)

The resulting multi-layer film was sealed at four sides so that the (c) layer faced to an inner side to produce a pouch of 15 cm × 15 cm including 150 ml of distilled water. The pouch was subjected to retort treatment at 130°C for 30 minutes and the appearance of the pouch immediately after it was taken out was visually observed and evaluated as follows.
A ... Totally, transparency is high and there is not uneven appearance.
B ... Locally, whitening is observed.
C ... Totally, whitening is observed in an uneven fashion.

### (Gas barrier property)

After the multi-layer film cut from the above pouch after retorting was allowed to stand at 23°C under a dry environment for 24 hours, oxygen permeability (cc/m²·day·atm) was measured under conditions of 23°C and 80%RH by means of an oxygen permeability-measuring apparatus "OX-TRAN 2/20" manufactured by MOCON Company.

### (Anti-pinhole property)

The resulting multi-layer film was cut into A4 size (21×29.7 cm), fixed in a state where four edges were opened, and subjected to retort treatment at 130°C for 30 minutes. Then, using a Gerbo Flex tester (manufactured by Rigaku Kogyo Company), a reciprocating motion of 440° twist (3.5 inches) + straight advance (2.5 inches) was repeated 100 times in an atmosphere of 23°C and 50%RH. Thereafter, oxygen permeability (cc/m²·day·atm) was measured under conditions of 23°C and 80%RH by means of an oxygen permeability-measuring apparatus "OX-TRAN 2/20" manufactured by MOCON Company. In the case where a pinhole was generated in an EVOH layer, the barrier property was lowered and the oxygen permeability was increased.

### Example 2

A resin composition was produced in the same manner as in Example 1 except that the EVOH composition (A2) was used in place of the EVOH composition (A1). Evaluation was conducted similarly.

### Example 3

A resin composition was produced in the same manner as in Example 1 except that the EVOH composition (A3) was used in place of the EVOH composition (A1). Evaluation was conducted similarly.

### Comparative Example 1

A multi-layer structure was produced in the same manner as in Example 1 except that the EVOH composition (A4) alone was used in place of the resin composition. Evaluation was conducted similarly.

### Comparative Example 2

A resin composition was produced in the same manner as in Example 1 except that the EVOH composition (A4) was used in place of the EVOH composition (A1). Evaluation was conducted similarly.

The evaluation results in Examples and Comparative Examples are summarized in Table 1.

**[Table 1]**

| | Appearance | Gas barrier property | Anti-pinhole property |
|---|---|---|---|
| Example 1 | A | 1.5 | 1.6 |
| Example 2 | A | 1.7 | 2.0 |
| Example 3 | A | 1.5 | 1.7 |
| Comparative Example 1 | C | -* | -* |
| Comparative Example 2 | B | 2.0 | 4.5 |

| | | | |
|---|---|---|---|
| *: impossible to measure since the value exceeded an upper limit of measurement. | | | |

### Industrial Applicability

The resin composition of the invention and a multi-layer structure using the composition is excellent in retort resistance at high temperature, gas barrier property, and anti-pinhole property and is useful for various packaging materials such as a food packaging material, a pharmaceutical packaging material, an industrial chemical packaging material and an agricultural chemical packaging material, in particular, for retort uses.

## Claims

1. A resin composition comprising an ethylene-vinyl alcohol copolymer (A) comprising the following structural unit (1) and a polyamide-based resin (B): 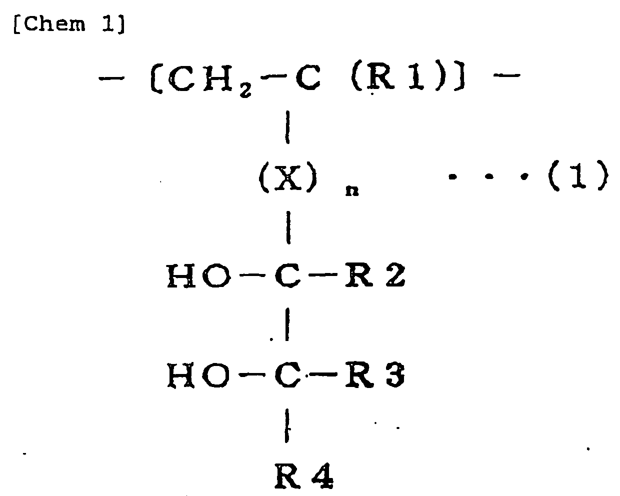 wherein the polyamide-based resin (B) is a terminal-controlled polyamide-based resin and X represents a bonding chain which is an arbitrary bonding chain excluding an ether bond, R1 to R4 each independently represents an arbitrary substituent, and n represents 0 or 1, and wherein a content ratio by weight of the ethylene-vinyl alcohol copolymer (A) to the polyamide-based resin (B) is 95/5 to 60/40.

2. The resin composition according to claim 1, wherein each of R1 to R4 in the structural unit (1) independently is any one of a hydrogen atom, a hydrocarbon group having 1 to 8 carbon atoms, a cyclic hydrocarbon group having 3 to 8 carbon atoms, and an aromatic hydrocarbon group.

3. The resin composition according to claim 1 or 2, wherein all of R1 to R4 in the structural unit (1) are a hydrogen atom.

4. The resin composition according to any one of claims 1 to 3, wherein X in the structural unit (1) is an alkylene having 5 or less carbon atoms.

5. The resin composition according to any one of claims 1 to 3, wherein n in the structural unit (1) is 0.

6. The resin composition according to any one of claims 1 to 5, wherein the structural unit (1) is introduced into a molecular chain of the ethylene-vinyl alcohol copolymer (A) by copolymerization.

7. The resin composition according to any one of claims 1 to 6, wherein the structural unit (1) is contained in an amount of 0.1 to 30% by mol in a molecular chain of the ethylene-vinyl alcohol copolymer (A).

8. The resin composition according to any one of claims 1 to 7, wherein the ethylene-vinyl alcohol copolymer (A) is obtained by saponifying a copolymer of 3,4-diacyloxy-1-butene, a vinyl ester-based monomer, and ethylene.

9. The resin composition according to any one of claims 1 to 8, wherein the ethylene-vinyl alcohol copolymer (A) is obtained by saponifying a copolymer of 3,4-diacetoxy-1-butene, a vinyl ester-based monomer, and ethylene.

10. The resin composition according to any one of claims 1 to 9, wherein the ethylene-vinyl alcohol copolymer (A) comprises a boron compound in an amount of 0.001 to 1 part by weight, in terms of boron, based on 100 parts by weight of the ethylene-vinyl alcohol copolymer.

11. A multi-layer structure comprising at least one layer comprising the resin composition according to any one of claims 1 to 10.

12. A multi-layer structure comprising a polyolefin layer on the inner side of a.layer comprising the resin composition according to any one of claims 1 to 10.

13. The multi-layer structure according to claim 11 or 12, wherein a polyamide resin layer is provided adjacent to at least one side of a layer comprising the resin composition according to any one of claims 1 to 10.

## Patentansprüche

1. Harzzusammensetzung, ein Ethylen-Vinylalkohol-Copolymer (A) mit der folgenden Struktureinheit (1) und ein auf Polyamid basierendes Harz (B) umfassend: 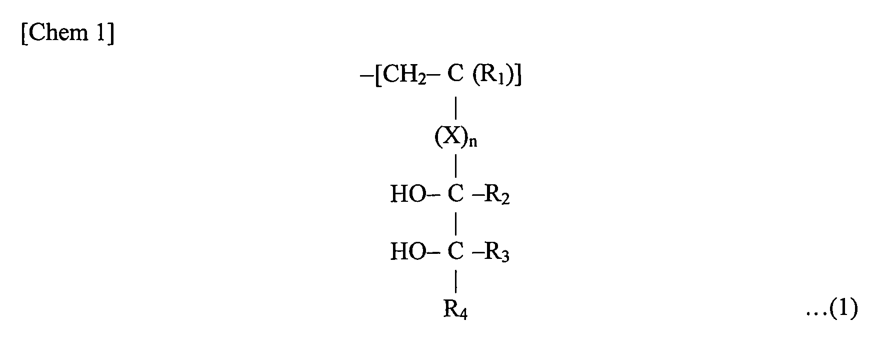 wobei das auf Polyamid basierende Harz (B) ein endgruppengesteuertes auf Polyamid basierendes Harz ist, und X eine Bindungskette wiedergibt, bei der es sich um eine beliebige Bindungskette ausschließlich einer Etherbindung handelt, R₁ bis R₄ jeweils unabhängig einen beliebigen Substituenten wiedergeben, und n 0 oder 1 wiedergibt, und wobei das Verhältnis des Gewichtsanteils des Ethylen-Vinylalkohol-Copolymers (A) zu dem auf Polyamid basierenden Harz (B) 95/5 bis 60/40 beträgt.

2. Harzzusammensetzung nach Anspruch 1, wobei jeder R₁ bis R₄ in der Struktureinheit (1) unabhängig beliebig ein Wasserstoffatom, eine Kohlenwasserstoffgruppe mit 1 bis 8 Kohlenstoffatomen, eine cyklische Kohlenwasserstoffgruppe mit 3 bis 8 Kohlenstoffatomen und eine aromatische Kohlenwasserstoffgruppe ist.

3. Harzzusammensetzung nach Anspruch 1 oder 2, wobei jeder R₁ bis R₄ in der Struktureinheit (1) ein Wasserstoffatom ist.

4. Harzzusammensetzung nach einem der Ansprüche 1 bis 3, wobei X in der Struktureinheit (1) ein Alkylen mit 5 oder weniger Kohlenstoffatomen ist.

5. Harzzusammensetzung nach einem der Ansprüche 1 bis 3, wobei n in der Struktureinheit (1) 0 ist.

6. Harzzusammensetzung nach einem der Ansprüche 1 bis 5, wobei die Struktureinheit (1) durch Copolymerisation in eine Molekülkette des Ethylen-Vinylalkohol-Copolymers (A) eingeführt wird.

7. Harzzusammensetzung nach einem der Ansprüche 1 bis 6, wobei die Struktureinheit (1) in einer Menge von 0,1 bis 30 Mol% in der Molekülkette des Ethylen-Vinylalkohol-Copolymers (A) enthalten ist.

8. Harzzusammensetzung nach einem der Ansprüche 1 bis 7, wobei das Ethylen-Vinylalkohol-Copolymer (A) durch Verseifen eines Copolymers von 3,4-Diacyloxy-1-buten, eines auf Vinylester basierenden Monomers und Ethylen erhalten wird.

9. Harzzusammensetzung nach einem der Ansprüche 1 bis 8, wobei das Ethylen-Vinylalkohol-Copolymer (A) durch Verseifen eines Copolymers von 3,4-Diacetoxy-1-buten, eines auf Vinylester basierenden Monomers und Ethylen erhalten wird.

10. Harzzusammensetzung nach einem der Ansprüche 1 bis 9, wobei das EthylenVinylakohol-Copolymer (A) eine Borverbindung in einer Menge von 0,001 bis 1 Gewichtsteil Bor umfasst, hinsichtlich des Bors, basierend auf 100 Gewichtsteilen Ethylen-Vinylalkohol-Copolymer.

11. Mehrschichtstruktur, umfassend wenigstens eine Schicht, welche die Harzzusammensetzung nach einem der Ansprüche 1 bis 10 umfasst.

12. Mehrschichtstruktur, umfassend eine Polyolefinschicht auf der Innenseite einer Schicht, welche die Harzzusammensetzung nach einem der Ansprüche 1 bis 10 umfasst.

13. Mehrschichtstruktur nach Anspruch 11 oder 12, wobei eine Polyamidharzschicht angrenzend an mindestens eine Seite einer Schicht bereitgestellt wird, welche die Harzzusammensetzung nach einem der Ansprüche 1 bis 10 umfasst.

## Revendications

1. Composition de résine comprenant un copolymère d'éthylène-alcool vinylique (A) comprenant l'unité structurelle (1) suivante et une résine à base de polyamide (B) : 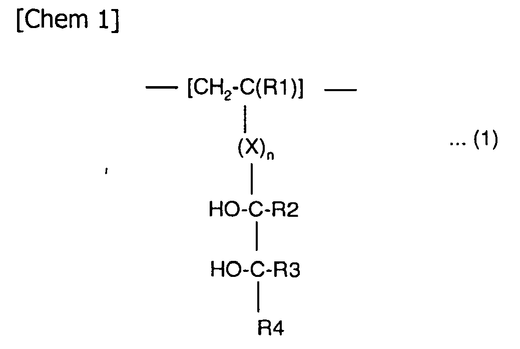 dans laquelle la résine à base de polyamide (B) est une résine à base de polyamide terminaison-contrôlée et X représente une chaîne de liaison qui est une chaîne de liaison arbitraire excluant une liaison éther, R1 à R4 représentent chacun indépendamment un substituant arbitraire, et n représente 0 ou 1, et dans laquelle une concentration en poids du copolymère d'éthylène-alcool vinylique (A) à la résine à base de polyamide (B) est de 95/5 à 60/40.

2. Composition de résine selon la revendication 1, dans laquelle chacun de R1 à R4 dans l'unité structurelle (1) est indépendamment l'un quelconque parmi un atome d'hydrogène, un groupe hydrocarboné ayant de 1 à 8 atomes de carbone, un groupe hydrocarboné cyclique ayant de 3 à 8 atomes de carbone et un groupe hydrocarboné aromatique.

3. Composition de résine selon la revendication 1 ou 2, dans laquelle tous les R1 à R4 dans l'unité structurelle (1) sont un atome d'hydrogène.

4. Composition de résine selon l'une quelconque des revendications 1 à 3, dans laquelle X dans l'unité structurelle (1) est un groupe alkylène ayant 5 atomes de carbone ou moins.

5. Composition de résine selon l'une quelconque des revendications 1 à 3, dans laquelle n dans l'unité structurelle (1) est égale à 0.

6. Composition de résine selon l'une quelconque des revendications 1 à 5, dans laquelle l'unité structurelle (1) est introduite dans une chaîne moléculaire du copolymère d'éthylène-alcool vinylique (A) par copolymérisation.

7. Composition de résine selon l'une quelconque des revendications 1 à 6, dans laquelle l'unité structurelle (1) est contenue dans une quantité de 0,1 à 30 % en mol dans une chaîne moléculaire du copolymère d'éthylène-alcool vinylique (A).

8. Composition de résine selon l'une quelconque des revendications 1 à 7, dans laquelle le copolymère d'éthylène-alcool vinylique (A) est obtenu par saponification d'un copolymère de 3,4-diacyloxy-1-butène, d'un monomère à base d'ester vinylique et d'éthylène.

9. Composition de résine selon l'une quelconque des revendications 1 à 8, dans laquelle le copolymère d'éthylène-alcool vinylique (A) est obtenu par saponification d'un copolymère de 3,4-diacétoxy-1-butène, d'un monomère à base d'ester vinylique et d'éthylène.

10. Composition de résine selon l'une quelconque des revendications 1 à 9, dans laquelle le copolymère d'éthylène-alcool vinylique (A) comprend un composé de bore dans une quantité de 0,01 à 1 partie en poids, en termes de bore, rapportée à 100 parties en poids du copolymère d'éthylène-alcool vinylique.

11. Structure multicouche comprenant au moins une couche comprenant la composition de résine selon l'une quelconque des revendications 1 à 10.

12. Structure multicouche comprenant une couche de polyoléfine sur le côté interne d'une couche comprenant la composition de résine selon l'une quelconque des revendications 1 à 10.

13. Structure multicouche selon la revendication 11 ou 12, dans laquelle une couche de résine de polyamide est fournie à côté d'au moins un côté d'une couche comprenant la composition de résine selon l'une quelconque des revendications 1 à 10.
